# EUROPEAN PATENT APPLICATION

(11) **EP 4 717 388 A1**
(43) Date of publication of application: **01.04.2026**
(21) Application number: 23925530.0
(22) Date of filing: 11.09.2023
(51) Int. Cl.: B23D 29/02, B23D 17/02

(54) **PYROTECHNIC CUTTER**

(30) Priority: 28.02.2023 RU 2023104425
(71) Applicant: Klishin, Andrei Dmitrievich, Ras Al Khaimah (AE)
(72) Inventor: KLISHIN, Ilya Dmitrievich, Moscow, 125362 (RU); KLISHIN, Dmitrii Ivanovich, Moscow region, Krasnogorskiy area, 143441 (RU); KLISHIN, Andrei Dmitrievich, Moscow, 125362 (RU)
(74) Representative: Kromanis, Artis
(86) International application number: PCT/RU2023/050214
(87) International publication number: WO 2024/181885

(57) **Abstract**

A pyrotechnic cutter which operates on cased blank cartridges comprises a fixed lower blade which has an inner support surface and is pivotally connected to an upper blade which interacts with a connecting link and a spring-loaded pusher. The spring-loaded pusher is provided with a stop, a piston, and a slider. Configured on the stop and the slider are support surfaces. The cutter comprises a damper with a support surface, a cartridge chamber, an extractor, a hammer mechanism, and a handle with a protuberance. Pivotally mounted on the hammer are a spring-loaded ratchet, and a spring-loaded trigger. The cutter comprises a striker having a protuberance in the lower pivoted portion thereof, and a firing pin. The upper blade is provided with a support surface which interacts with an outer support surface on the lower blade. The invention provides reliable damping of the inertial mass of the movable elements of the pyrotechnic cutter structure, thereby increasing the operating reliability thereof.

## Description

The invention relates to the field of metal-cutting tools and can be used in emergency rescue operations, in automobile inspection for dismembering the structure of a car that has suffered an accident, to provide access to the victim, in rescue services to provide access to burning objects, in other emergency situations.

Portable cutters (1) are known (application of the Federal Republic of Germany No. 3809640, cl. B23D 29/00, 1988).

These cutters consist of pivotally connected cutting blades, a transmission mechanism with a wedge drive, a drive with a high-pressure piston, a drive with a low-pressure piston, a system of bypass valves for both low and high pressure, a stationary handle and a built-in reservoir with hydraulic fluid.

This portable cutter has disadvantages, consisting of high labor intensity of cutting and significant time of one cutting cycle (compression - release of knives) due to the fact that it is necessary to pump hydraulic fluid according to the principle of a jack, in addition, this cutter is very complex in design, which should be reflected in their reliability and, in the opinion of the authors, should have a large mass.

Also known are portable cutters (2) described in the materials of the application of the Federal Republic of Germany No. 2238600, class B 23 D 17/02, 1972. The portable cutter consists of the cutter itself, including pivotally connected by an axis rotary cutting blades with a hydraulic mechanism with a piston and valves, connected by a high-pressure hose to a compressor, which, in turn, is connected to an internal combustion engine or to an electric motor.

The main disadvantage of this portable cutter is their dependence on an external power source (motor with compressor). An external power source imposes great limitations on the possibility of using this cutter in extreme situations. It takes a long time to deliver and prepare this cutter for work, it is impossible to carry the cutter over long distances from the engine with the compressor due to the limited length of the hoses, which imposes restrictions on working with them in hard-to-reach places.

Also known are portable pyrotechnic cutter (3) described in the materials of application RU No. 2661652, class B 23 D 15/04, B 23 D 15/12.

This cutter consists of a fixed and a movable blade, where the movable blade is made in the form of a slide installed in the body of the fixed blade and is part of a spring-loaded pusher with a piston, in addition, in front of the piston there is a sub-piston cavity and an above-piston cavity with a chamber made in it, interacting with the hammer mechanism with a hammer with a trigger, the chamber is connected to the reloading device with a reciprocating breech mechanism of the hammer mechanism. The breech mechanism is combined with a clip with several cartridges located in it, including a firing mechanism with an extractor and a striker.

This portable cutter also has shortcomings, which consist in the design of the blades, which allow cutting (chopping) only rods, pipes of a certain (small) diameter, and blades are required for cutting mechanical engineering structures.

The stop of the movable blade with the piston during the cutting process and simply when the cutter is triggered is carried out by a hard blow of the movable blade into the fixed blade and compression of air (creation of counter pressure) in the sub-piston cavity, which is ineffective and may allow the use of low-power cartridges, otherwise this will lead to the destruction of the device, injury to the operator and an insignificant resource (number of triggerings) of the cutter, in addition, such cutter does not have a significant cutting force, which may be insufficient during rescue operations.

The cutter has a chamber and the ability to work with only one type of cartridge case, which significantly limits the possibility of their application, use in different regions, countries, since in these regions there is production of certain types of cartridge cases, and the development of a new type of cartridge case requires significant costs or the acquisition of cartridge cases in other regions and the execution of the relevant documents required for the new type of cartridge case.

The use of a multi-charger with a magazine in this tool is good only at first glance:
- firstly, working with this cutter is not safe, this is not a weapon where it is necessary to shoot faster, and where individual training and assignment of the weapon to a specific person is required, and portable pyrotechnic cutter is general-purpose equipment and for its reliable operation it must be simple, have no removable elements and be accessible to any person when working with it, in addition, in the cutter it is necessary to return the actuator to its original position for the next operation, which takes time, it is returned by a spring and by manual adjustment, otherwise, if the piston does not return to its original position, the cutter will not develop the required cutting force and in addition, the presence of an unfired cartridge in the chamber is also unsafe for the operator when manipulating the return of the actuator, in addition, for repeated operation, the cutting elements of the cutter must be brought to the required cutting place, otherwise the operation will be ineffective and there may be a blank operation, which is not recommended by the manufacturer;
- secondly, the presence of removable elements in the design of cutter, such as a locking mechanism with a firing pin with an extractor with a hammer mechanism striker, makes the operation of this device difficult and unreliable, the above-mentioned design elements are justified in automatic weapons and are well-developed, but at the same time, weapons are an individual accessory of specific and trained people, and cutter is a device for general use, by shift service personnel and during its maintenance: disassembly, cleaning, lubrication, the presence of removable elements can lead to their loss, damage, improper assembly, which will lead to their inoperative state, such devices for general use should not have removable elements that affect their operability, safety of use and exclude the possibility of their improper assembly during cleaning, lubrication.

The presence of a multi-charger greatly and inappropriately complicates the device, and is not safe when working with cutter.

The reload time of a simple single-shot device is no more than the time it takes to return the blades to their original position in preparation for another cut.

In addition, the cutter allow the operator to work only by pressing the trigger mechanism with his hand, and when the cutter is triggered, they are returned to the operator's hand.

Portable cutter (4) is known, described in the materials of the patent of the Russian Federation No. 2070483 dated 210.12.1996 ((19) RU (11) 2070483 (13) C1 (51) 6 B 23 D 17/02, 29/00.

This cutter comprises upper and lower blade, pivotally connected by an axis, a spring-loaded pusher with a spring, a slider with a support platform and a piston, placed in the housing of the lower blade and interacting with the support platform of the slider with the inner support platform of the lower blade. The upper blade is connected by means of axles with a shackle to the slider belonging to the spring-loaded pusher, which has a rigidly installed piston with a stop, made in the form of a single part. The cutter ia equipped with a damper consisting of annular conical springs and having a support platform interacting with the support platform of the stop with a piston belonging to the spring-loaded pusher, the slider of the spring-loaded pusher contains a support platform interacting with the inner support platform of the housing of the lower blade, the slider is equipped with annular grooves with radial holes, connected to an internal cavity made in a spring-loaded pusher filled with grease. The cutter comprises a chamber placed in a separate housing, an above-piston cavity, a pre-combustion chamber with a nozzle with a calibrated hole, placed in a separate chamber housing, the above-piston cavity is provided with a second calibrated hole made in the second nozzle connected to the gas divider. A separate chamber housing is pivotally connected to the handle housing and the trigger mechanism placed in it and is fixed in the closed position by the bolt. The trigger mechanism comprises a spring-loaded trigger with a rocker with a protrusion installed on it and spring-loaded relative to it by a spring. A striker made in the form of a two-arm lever with a profile protrusion on the upper arm of the lever interacting with the striker. The striker is pivotally mounted in the handle body together with a bracket, spring-loaded by springs, the lower arm of the striker interacts with the bracket on one side, and with the trigger on the other side. The bracket contains projections located in the shaped grooves of the handle body. A safety catch is pivotally mounted in the handle body, spring-loaded by a spring consisting of an axis with a flag and having grooves at the points of contact with the upper arm of the striker and the spring, respectively. A bolt is installed in the handle body, made in the form of an axis located in the holes of the handle body. The axis interacts with a bar, pivotally mounted on the handle body. The bolt contains a button, also located in the handle body, connected by an axis to the bar and spring-loaded by a spring located in the button on the axis. In addition, a profile projection is made on the handle body, interacting with an extractor, pivotally mounted on the chamber body.

This device eliminates a number of shortcomings of the above-mentioned analogs. However, it also has shortcomings.

Return of the upper blade, pivotally connected by an axis to the lower blade and a spring-loaded pusher with a slider with a stop and a piston, to its original position by means of only the pusher spring does not reliably return the upper blade and the moving elements of the mechanism to their original position after cutting, the return spring is located in the cutter's body and rests with one end on the piston, the other - on the lower blade's body. For reliable operation of this spring, a large margin of its strength, its deformation course and a longer time of its deformation are required. The solution of these issues by strengthening and increasing the course of this spring in these blades will lead to a significant increase in their dimensions and weight, which will make them unacceptable for work.

The implementation of a spring-loaded pusher with a stop, a piston and aslider, rigidly connected as a single part, and the total imposition of tolerances for the manufacture of individual parts leads to significant misalignment of the contact cylindrical surfaces of the piston with the stop and the slider, which, together with a similar misalignment of the body parts in which they are installed, leads to rubbing, jamming of the piston rod in the chamber body, which in turn leads to an unreliable return to the original position of the upper blade after cutting. The solution to this problem by increasing the gaps on one side of the piston and the chamber body leads to a breakthrough of powder gases from this side at the moment of operation, which leads to a decrease in the cutting force.

The placement of a separate housing in the pre-combustion chamber of a nozzle with a calibrated hole in the above-piston cavity leads to a more complex design of the cutter and the presence of removable design elements that make the operation of portable pyrotechnic cutter less reliable.

The implementation of support surfaces on the pusher stop and the spring-loaded pusher slider, interacting respectively with the damper support surface and the inner support surface of the lower blade, allows the remaining energy and inertial mass to be absorbed after the cutting process and damping only the mass of the spring-loaded pusher, the slider, the stop and the piston.

Unreliable operation of the trigger mechanism, frequent misfires are due to the complexity of the design - a large number of parts and the use of tension springs. At the moment of operation, an axial vibration shock is created, which causes the tension springs to become loose, which significantly reduces the service life and the number of operations of the cutter.

The closest to the claimed portable pyrotechnic cutter (hereinafter referred to as cutter) in technical essence and achieved effect, in the opinion of the authors, is a portable pyrotechnic cutter (5), adopted by the authors as a prototype, described in the materials of the patent of the Russian Federation No. 2594233 of 27.01.2015 ((19) RU (11) 2594233 (13) Cl (51) IPC B 23 D 17/02, (2006.01).

This cutter, like the previous analogue, comprises an upper and lower blades, hingedly connected by an axis, a spring-loaded pusher with a spring, a slider with a support surface and a piston, located in the body of the lower blade, interacting with the support surface of the slider with the internal support surface of the lower blade. The upper blade is connected by a link and by means of axles to the slider belonging to the spring-loaded pusher. The spring-loaded pusher comprises a piston with a stop installed with the possibility of radial movement relative to the axis of the rod.

The cutter is provided with a damper consisting of annular conical springs and having a support surface interacting with the support surface of the stop with a piston belonging to the spring-loaded pusher, the slider of the spring-loaded pusher comprises a support surface interacting with the internal support surface of the lower blade housing, the slider is provided with annular grooves with radial holes connected to the internal cavity made in the spring-loaded pusher, filled with lubricant.

The cutter comprises a permanently installed cartridge chamber, located in a separate housing, and on the handle housing there is a profile protrusion interacting with an extractor, pivotally mounted on the cartridge chamber housing, an above-piston cavity, a pre-combustion chamber with a nozzle with a calibrated hole, placed in a separate chamber body, the above-piston cavity is provided with a second calibrated hole made in the second nozzle connected to the gas divider. The chamber body is pivotally connected to the handle body and placed in it with the trigger mechanism and is fixed by the bolt. The trigger mechanism excludes the presence of tension springs in its design, contains a trigger spring-loaded by a torsion spring, made double-armed, on the lower arm a ratchet is pivotally mounted and spring-loaded relative to it by means of a torsion spring, interacting with a protrusion made on the lower part of the hinge joint of the striker, spring-loaded by a torsion spring relative to the trigger mechanism body. The striker interacts with the firing pin with its upper arm. The handle body has a hinged safety catch, spring-loaded by a leaf spring consisting of an axis with a flag and having grooves in the places of contact with the upper arm of the striker and the spring, respectively. The handle body has a bolt, made in the form of an axis placed in the holes of the handle body. The axis interacts with a bar, hinged on the handle body. The bolt contains a button, also located in the handle body, connected by an axis to the bar, and is spring-loaded by a spring placed in the button on the axis.

This device eliminates a number of shortcomings of the above-mentioned analogs. However, it also contains shortcomings consisting of:
- unreliable damping of the energy and inertial mass of the slider, the spring-loaded pusher with the stop and the piston, the upper blade with the link and the axis, and in general insufficient reliability of the cutter;
- impossibility of working with portable cutter with different cartridges having different shell geometries;
- loss of energy and complication of the design due to the nozzle installed behind the chamber;
- unsafe operation of the trigger mechanism, due to the possibility of protrusion of the striker when closing the handle of the cutter;
- limiting the work with the cutter due to the recoil of the cutter on the operator's hand.

These shortcomings are due to the fact that the implementation of support surfaces on the stop of the spring-loaded pusher and the slider of the spring-loaded pusher, interacting respectively with the support surface of the damper and the internal support surface of the lower blade, made it possible to partially dampen the remaining energy after the cutting process and the inertial mass after damping only the mass of the spring-loaded pusher of the slider, the stop and the piston, and the inertial mass of the upper blade with the link and the axes connecting them is not dampened in any way, which leads to deformation of the axes, breaking of the holes in which the axes are located, destruction of the link, and, in total, to the rapid failure of the cutter.

This cutter does not have the ability to work with different cartridge cases that have different geometry, a protruding ledge or a recessed groove and ensure their extraction by turning the handle of the trigger mechanism housing with a profile protrusion interacting with the extractor, pivotally mounted on a separate chamber housing.

The placement of the cartridge chamber together with the nozzle with a calibrated hole, located in a separate housing in the above-piston cavity of the pre-combustion chamber, leads to an additional loss of energy when the cartridge is triggered due to additional channels for the passage of the stream of powder gases; in addition, the nozzle is an easily removable element that must be removed when cleaning the cutter, and is often lost, having small dimensions.

Working with this cutter is unsafe due to the possibility of the striker protruding when the handle of the cutter is closed. This is due to the fact that the striker with its upper arm constantly interacts with the striker, unless the striker is on the safety catch installed in the handle body and spring-loaded by a leaf spring. When the cutter is on the safety catch, the striker with its upper arm interacts with one of the safety catch grooves and does not touch the striker, when the safety catch is turned to the firing position, the striker does not interact with the safety catch and is constantly in contact with the striker, and the striker protrudes beyond the contour of the handle, and if the cutter is not on the safety catch when the handle of the trigger mechanism is closed, due to the striker protruding beyond the contour of the trigger mechanism, the cartridge cap may be punctured if the cartridge is in the chamber, which is unsafe and does not exclude the possibility of unintentional triggering of the cutter. The leaf spring fixes the safety catch in two positions - in the safety position or in the combat position.

When working with cutter, the operator experiences a recoil of the cutter in his hand. Firearms have the same recoil. To operate the cutter, the operator holds the cutter by the ribbed body in the area of the front blade with one hand, holds the handle with the other hand, and when the trigger is pressed, the cutter is triggered. In this case, all the recoil is in the operator's hand through the handle - the body of the trigger mechanism, which causes pain.

The invention is based on the solution of the problem aimed at creating pyrotechnic cutter for cutting mechanical engineering structures, greater reliability with reliable damping of the inertial mass of the moving elements, the slider, the spring-loaded pusher with the stop and the piston, the upper blade with the link and the axis, wherein the portable pyrotechnic cutter providing the ability to work with various cartridges with different case geometries, eliminating unnecessary energy loss and simplifying the design, increasing the safety of the trigger mechanism, due to the elimination of the possibility of the striker protruding when closing the handle of the portable pyrotechnic cutter, and expanding the ability to work with cutter, eliminating the recoil of the cutter to the operator's hand.

Aforementioned problems are solved in the pyrotechnic cutter, working with the blank cartridges with different cartridge cases, comprising a fixed lower blade with an internal support surface, an upper blade pivotally mounted on it, a link, a spring-loaded pusher with a slider, a stop and a piston, with support surfaces on the stop and the slider of the spring-loaded pusher, a damper with a support surface, a cartridge chamber, an extractor, a trigger mechanism with a handle having a projection, with a hinged and spring-loaded trigger with a ratchet, a striker with a projection made on the lower part of the pivot joint of the striker, and a firing pin.

In this pyrotechnic cutter, the upper blade is provided with a support surface that interacts with the outer support surface made on the lower blade.

At the same time, the distinctive feature of the proposed pyrotechnic cutter is that it is equipped with removable cartridge chambers of various configurations, repeating the contour of various cartridge cases, having a protruding ledge or a recessed groove in the case, while:
- for a cartridge case with a protrusion, the extractor is made in the form of a two-arm lever, contacting one end with the protrusion of the cartridge case, and the other end with a handle projection;
- for a cartridge case with the groove, the extractor is also made in the form of a two-plate, two-arm lever, having two plates - an upper and a lower one, wherein the upper plate is made in the form of a plate spring, interacting with one arm with the groove of the cartridge case, while the arm interacting with the the groove of the cartridge case is provided with a bevel on one side, on the other side it has a right angle and a protrusion with a contact surface, interacting with the handle body, the other arm is an element of the lower plate, interacting with the handle protrusion.

In addition, the cartridge chambers are equipped with a calibrated hole on one side at the exit, which functions as a nozzle, and on the other side has a slit for one end of the extractor.

Another distinctive feature of this pyrotechnic cutter is that a projection is made on a separate housing of the cutter chamber, interacting with a counter projection made on the upper arm of the striker of the trigger mechanism, in addition, a spring-loaded support is pivotally installed in the housing of the trigger mechanism, interacting with an additional projection made on the lower part of the pivot joint of the striker and a ratchet pivotally installed on the trigger.

In addition, the pyrotechnic cutter is distinguished by the fact that the trigger with the trigger of the cutter's trigger mechanism is equipped with an additional protrusion located in a groove made in the trigger mechanism body and extending beyond the contour of the trigger mechanism body.

The implementation in the pyrotechnic cutter on the fixed lower blade with an internal support surface of the additional external support surface and the support surface on the upper blade, pivotally connected to the lower blade, along with support surfaces on the stop of the spring-loaded pusher and the slider of the spring-loaded pusher, interacting respectively with the support surface of the damper and the internal support surface of the lower blade, made it possible to extinguish the remaining energy and inertial mass after the cutting and damping process of not only the mass of the spring-loaded pusher, the slider, the stop and the piston, but also the inertial mass of the upper blade with the link and the axes connecting them, which eliminates the possibility of deformation of the axes, breaking the holes in which the axes are located and the destruction of the link, and increases the damping of the moving elements of the cutter structure, eliminates the possibility of the cutter failing and generally increases the reliability of the pyrotechnic cutter.

Another distinctive feature of the pyrotechnic cutter is that it is made with removable cartridge chambers of various configurations, repeating the contour of various cartridge cases with the protruding ledge or a recessed groove, while the extractor for the cartridge case with the ledge is made in the form of the two-arm lever, contacting with one end with the protrusion of the cartridge case, with the other end - with the protrusion of the handle, and under the cartridge case with the groove, the extractor is made in the form of a two-plate two-arm lever, having two plates - upper and lower, the upper plate is made in the form of a leaf spring, interacting with one arm with the groove of the cartridge case, while the arm interacting with the groove of the cartridge case on one side is provided with a bevel, on the other side it has a right angle and a protrusion with a contact surface interacting with the body of the handle, the other arm is the element of the lower plate interacting with the protrusion of the handle, in addition, the cartridge chamber on one side at the exit are provided with a calibrated hole that performs the functions of a nozzle, on the other side they have a groove for one of the ends of the extractor, such design of the cartridge chamber and extractors made it possible to provide the possibility of replacing the pyrotechnic cutter the cartridge chamber and the extractor cartridge required for a given cartridge case, thereby ensuring the ability to operate the pyrotechnic cutter with various cartridges that have different cartridge case geometries, and the implementation of a calibrated hole on one side at the cartridge chamber exit that functions as a nozzle made it possible to eliminate energy loss, eliminate the nozzle with a calibrated hole from the design, and simplify the design of the pyrotechnic cutter.

Implementation in the pyrotechnic cutter of a protrusion on a separate housing of the cutter chamber, interacting with a counter protrusion made on the upper arm of the striker of the trigger mechanism, and the pivotally installation in the housing of the trigger mechanism of a spring-loaded support interacting with an additional protrusion made on the lower part of the hinge joint of the striker, and a ratchet pivotally installed on the trigger, made it possible to ensure safe operation of the cutter, since when the handle of the trigger mechanism is opened, the striker with its protrusion made on the upper arm interacts with a protrusion made on a separate housing of the cutter chamber, moves away from the striker and the support pivotally installed in the trigger mechanism body, rests against an additional projection on the lower part of the striker hinge joint by means of a torsion spring, is fixed, preventing the striker from interacting with the firing pin, when closing the trigger mechanism handle, even if the striker is not on the safety catch installed in the handle body and spring-loaded by a leaf spring. When the cutter is on the safety catch, when the trigger is pulled, the striker interacts with one of the grooves of the safety catch and does not touch the firing pin, when the safety catch is turned to the firing position, the striker interacts with the support and does not interact with the firing pin when closing the trigger mechanism handle, eliminating the possibility of pricking the cartridge cap if the cartridge is in the chamber, eliminating the possibility of unintentional activation of the cutter, and increasing the safety of working with pyrotechnic cutter. The leaf spring fixes the safety catch in the safety or firing position.

The production of the pyrotechnic cutter with the trigger and with the trigger mechanism, equipped with an additional protrusion placed in the groove made in the handle of the trigger mechanism housing and extending beyond the contour of the trigger mechanism housing, made it possible to expand the possibility of working with pyrotechnic cutter, eliminating the recoil of the cutter on the operator's hand, since the hand pulling the trigger does not rest against the trigger mechanism housing, and the second hand holding the pyrotechnic cutter does not limit the movement of the cutter during recoil and thus is not affected by recoil.

The operation of the pyrotechnic cutter is explained by the drawings, where:

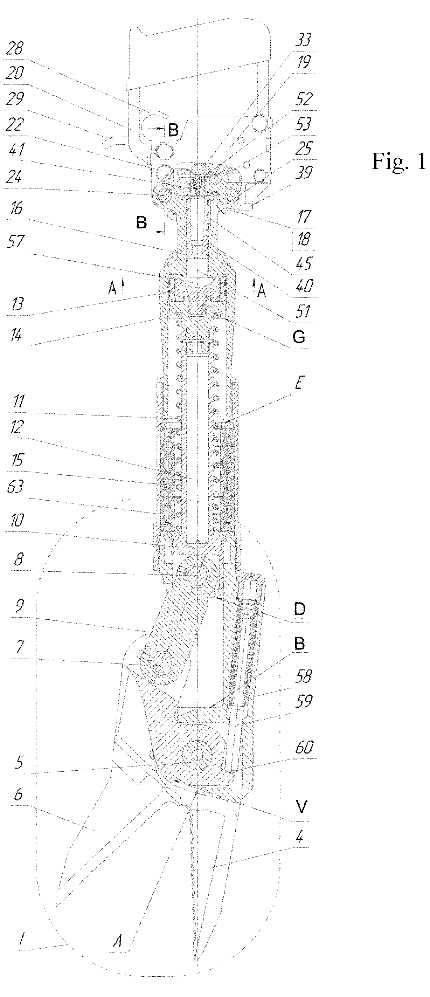

Fig. 1 - shows a general view of a pyrotechnic cutter;

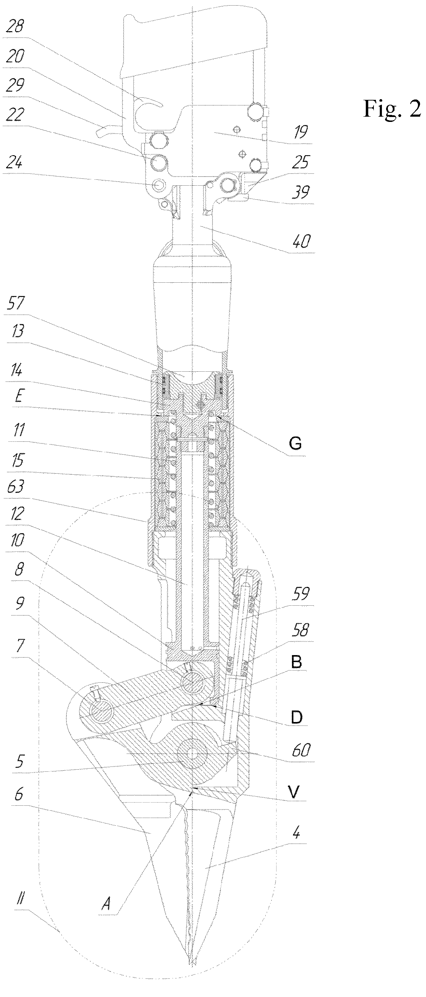

Fig. 2 - the same as in Fig. 1 in the closed position;

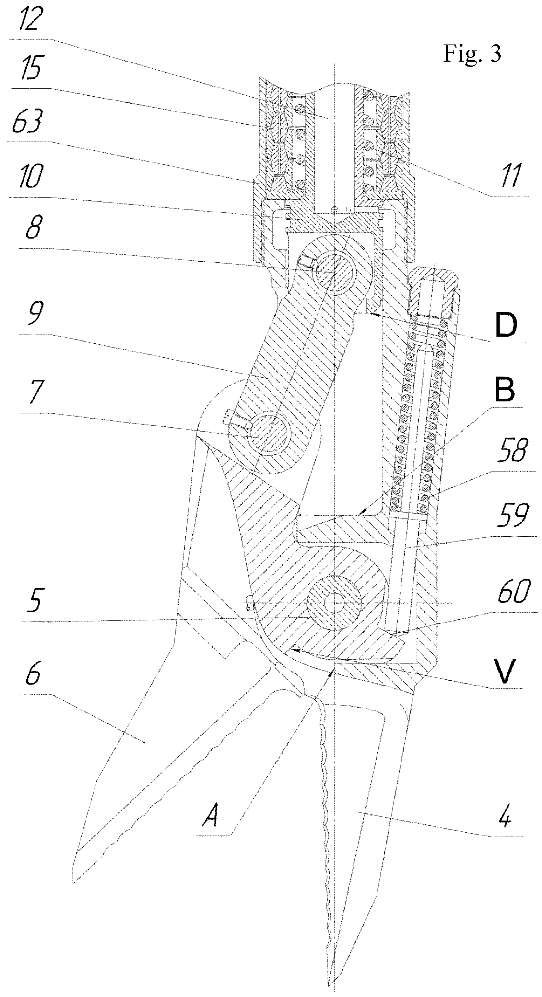

Fig. 3 - unit I as seen in Fig. 1 (the lower blade with internal and external contact surface, the upper blade with a contact surface with support surfaces on the pusher stop and the slider of the spring-loaded pusher and the damper);

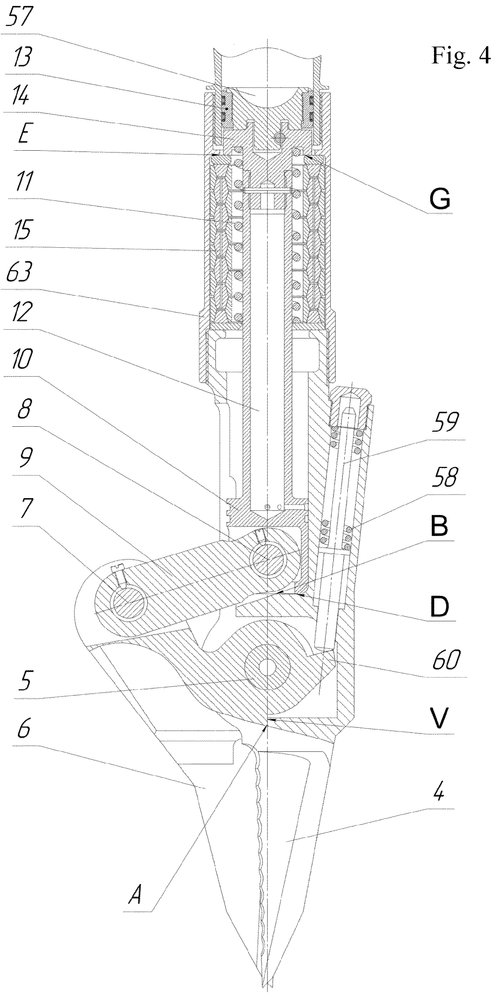

Fig. 4 - unit II as seen in Fig. 2 in the closed position;

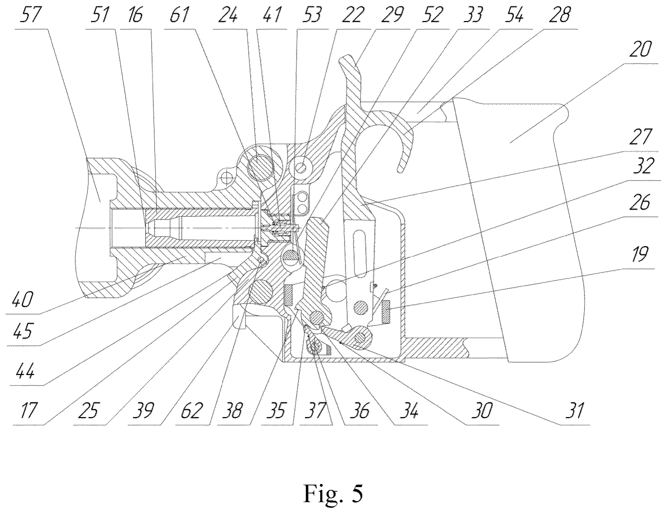

Fig. 5 - shows a separate chamber body with a removable chamber for a cartridge with a projection, the handle with the trigger mechanism in the free position;

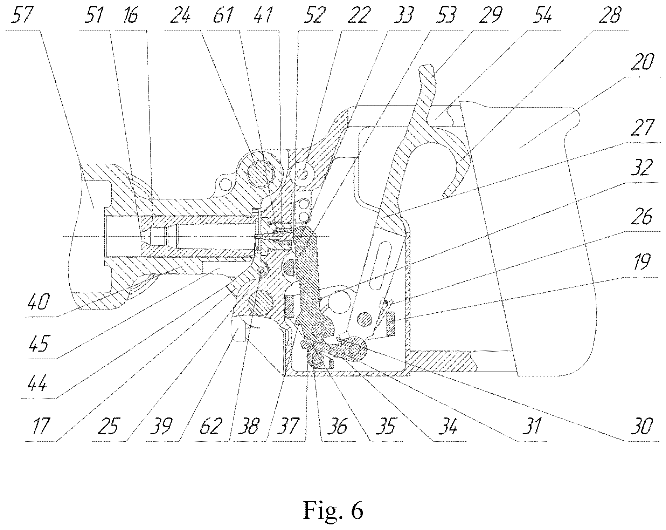

Fig. 6 - the same as seen in Fig. 5 at the moment of operation;

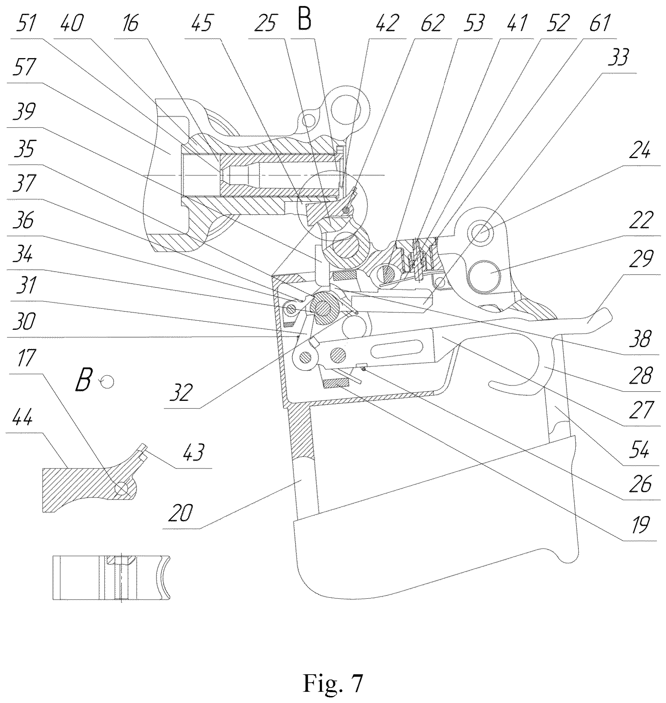

Fig. 7 - the same as seen in Figs. 5, 6 with the open handle;

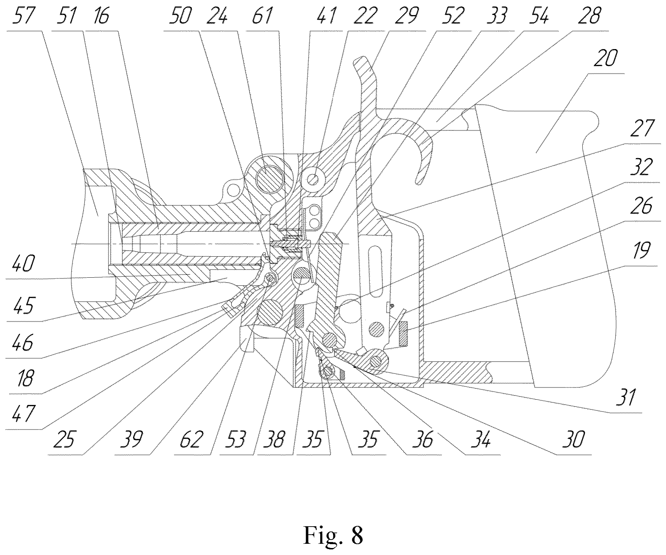

Fig. 8 - shows a separate chamber body with a removable chamber for a cartridge with a groove, the handle with the trigger mechanism in the free position;

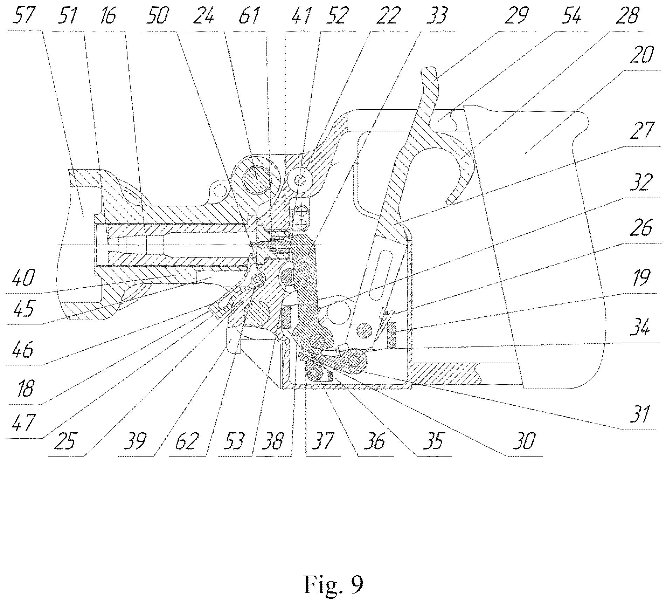

Fig. 9 - the same as seen in Fig. 8 at the moment of actuation;

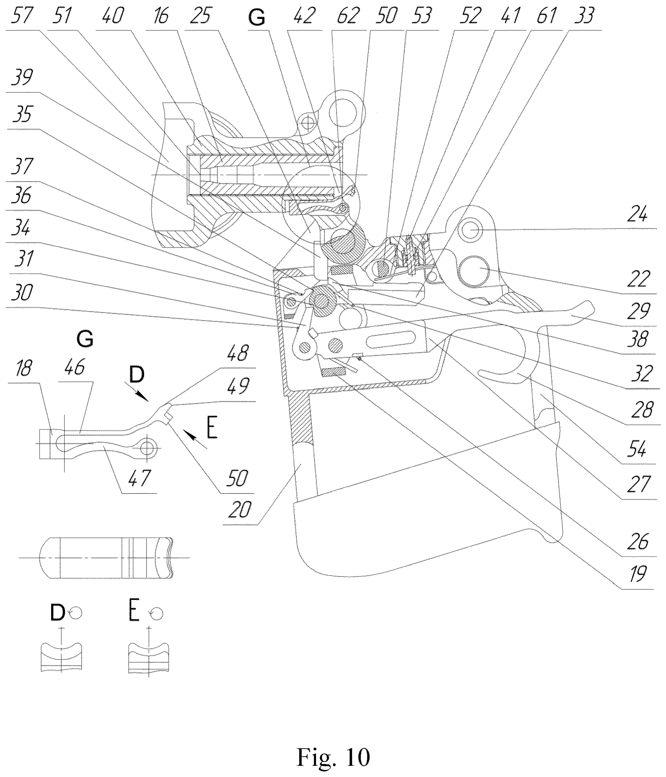

Fig. 10 - the same as seen in Figs. 8, 9 with the handle open;

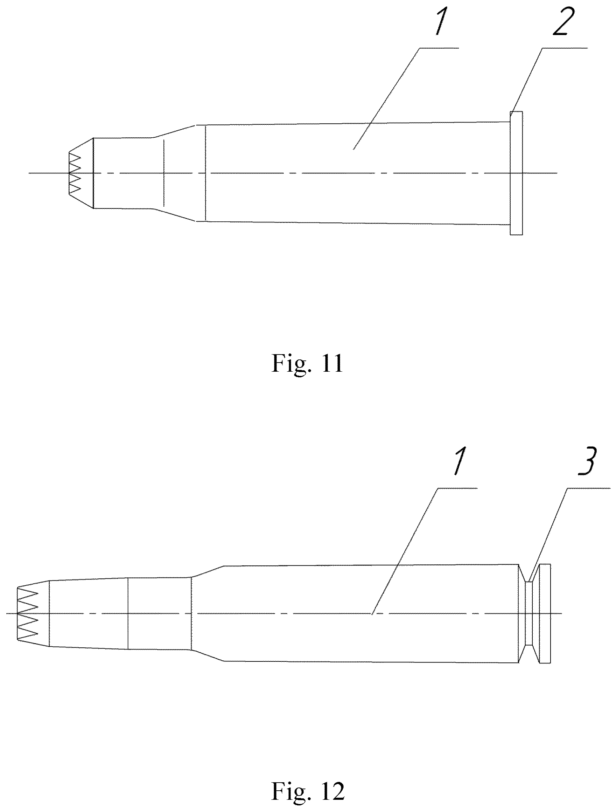

Fig. 11 - a cartridge case with a protrusion;
Fig. 12 - a cartridge case with a groove;

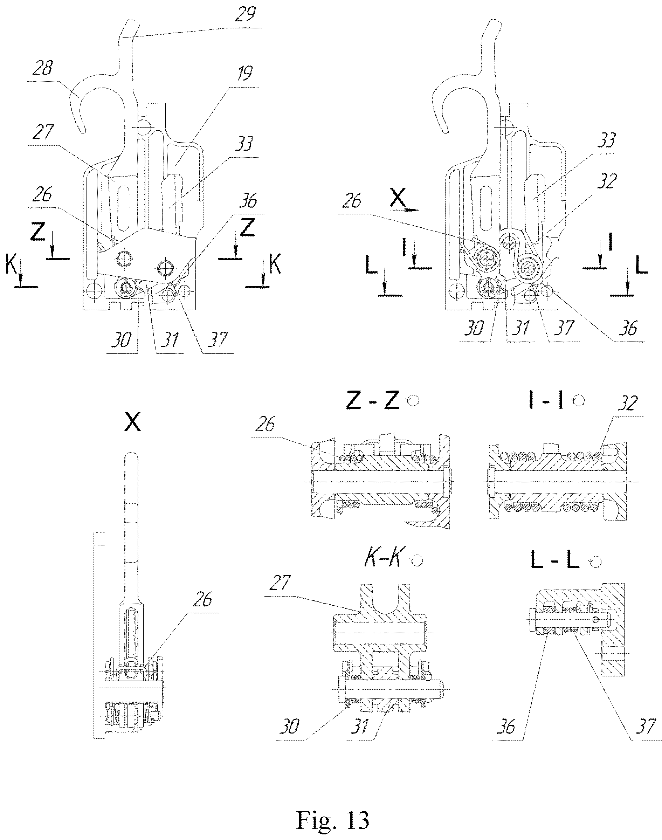

Fig. 13 - shows a trigger mechanism;

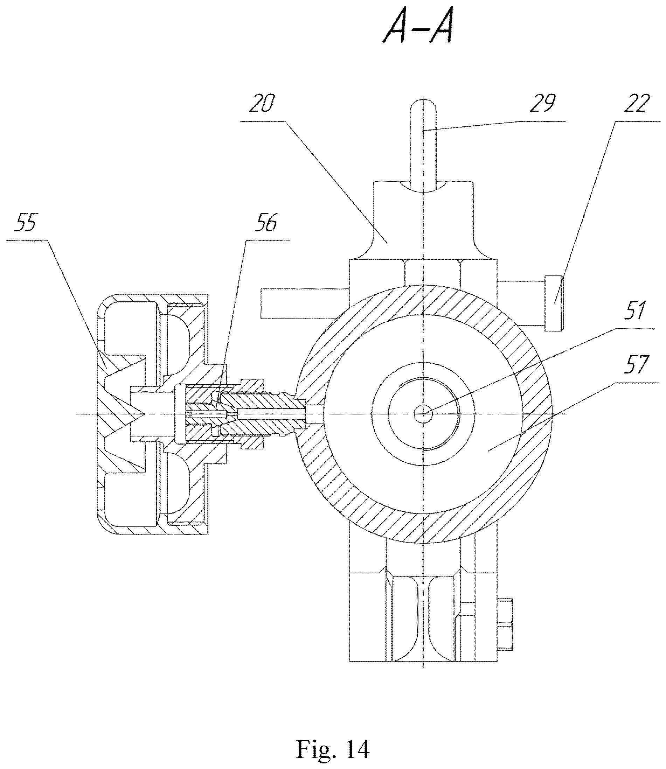

Fig. 14 - shows section A-A of Fig. 1 (a gas divider - a muffler with anozzle);

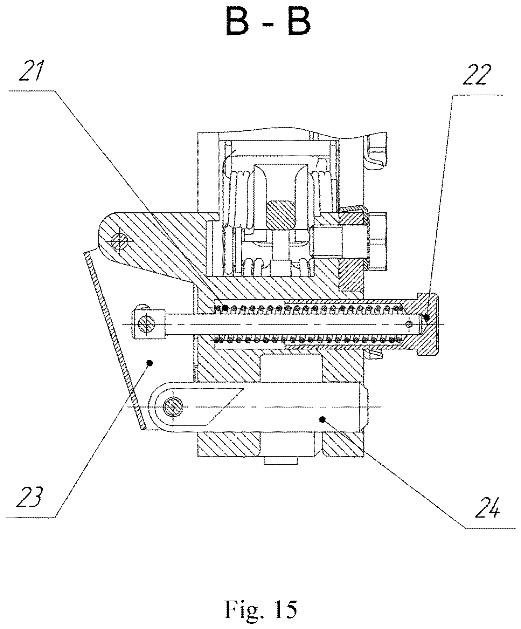

Fig. 15 - shows section B-B of Fig. 1 (a spring-loaded lock with a button and an axis);

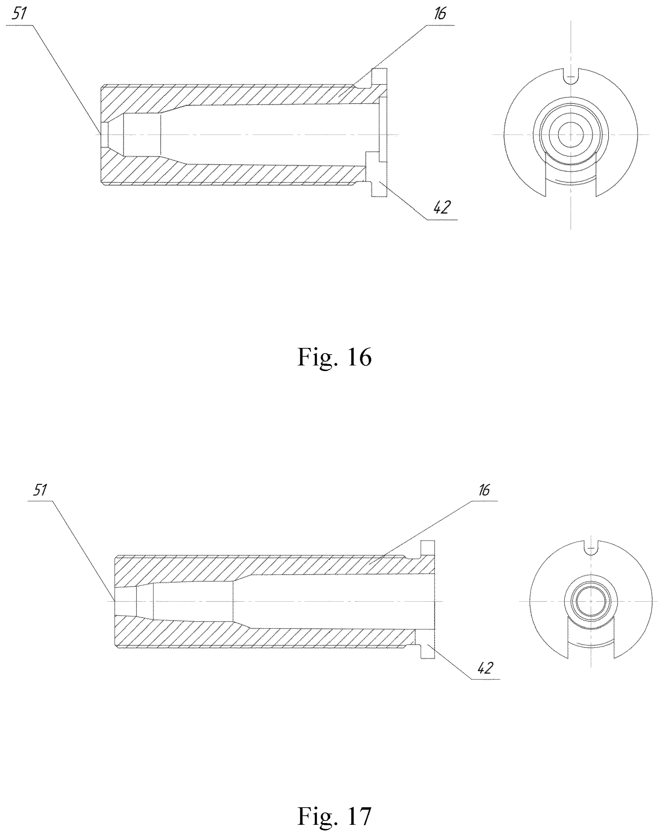

Fig. 16 - a cartridge chamber for a cartridge with a protrusion with a groove for an extractor;
Fig. 17 - a cartridge chamber for a cartridge with a groove and a slit for an extractor.

According to the authors, the proposed invention meets the criteria of an inventive step, since the existing distinctive features of the invention from the known prior art have not been identified.

A pyrotechnic cutter, working from a blank cartridge 1 having a projection 2 or a groove 3, comprises a fixedly installed lower blade 4 with external "A" and internal "B" support surfaces, pivotally connected by an axis 5 to the upper blade 6, with a support surface "V", pivotally connected by axes 7, 8 by a link 9 with a slider 10 spring-loaded by a spring 11 of a pusher 12 and a piston 13 with a stop 14 with support surfaces "G" on the stop 14 and "D" of the slider 10 of the spring-loaded pusher 12, a damper 15 with a support surface "E", a removable cartridge chamber 16, extractors 17, 18, a trigger mechanism 19, located in the body of a handle 20 with a spring-loaded spring 21 button 22, connected by a bracket 23 with an axis - a lock 24, the handle 20 is provided with a projection 25, interacting with extractors 17, 18 when the handle is turned. In the housing of the trigger mechanism 19, a trigger 27 with a trigger hook 28 with an additional projection 29 are pivotally mounted and spring-loaded in it by a torsion spring 26, a ratchet 31, spring-loaded by a torsion spring 30, is pivotally mounted on the trigger 27, a striker 33 with two projections in the lower part of the hinged connection is also pivotally mounted and spring-loaded by a torsion spring 32, one projection 34, contacting with the ratchet 31 of the trigger 27 and an additional projection 35 contacting with the support 36, spring-loaded by a torsion spring 37 and a protrusion 38 on the upper arm of the striker 33, interacting with a stop 39, made on a separate housing 40, in the housing of the handle of the trigger mechanism 20 a spring-loaded striker 41 is placed.

The pyrotechnic cutter also comprises removable cartridge chambers 16 of various configurations, repeating the contour of various cartridges 1, having cartridges with a protruding projection 2 or a recessed groove 3. The removable chambers 16 additionally have grooves 42, in which the ends of the extractors 17, 18 are located, interacting with the cartridges 1.

In addition, the pyrotechnic cutter comprises various extractors 17, 18, for each cartridge case, while for the cartridge case with protrusion 2, the extractor 17 is made in the form of a two-arm lever, contacting with one end 43 the protrusion 2 of the cartridge case 1, and with the other end 44 the groove 45 on the separate body 40, under the sleeve 3 with a groove, the extractor 18 is made in the form of a two-plate double-arm lever comprising two plates, the upper plate 46 and the lower plate 47, wherein the upper plate 46 is made in the form of a leaf spring interacting with one shoulder with the groove 3 of the cartridge case 1, with the other end - with the groove 45 on the separate body 40, wherein the shoulder of the upper plate 46 interacting with the groove 3 of the cartridge case 1 on one side is provided with a bevel 48, on the other side it has a right angle 49 and a projection with a contact surface 50, the lower plate 47 interacts with its shoulder with the projection of the handle 25, in addition, the cartridge chambers 16 on one side at the exit are provided with a calibrated hole 51, performing the functions of a nozzle, on the other side they have a groove 42 under the end of the extractors 17, 18.

The pyrotechnic cutter with the projection 39 on the separate housing 40 of the cutter interact with the counter projection 38 on the striker 33 of the trigger mechanism 19, in addition, the trigger mechanism 19 is provided with the spring-loaded torsion spring 37, the support 36 interacting with the projection 35 of the striker 33, wherein in the housing 20 a safety catch 53 is installed, spring-loaded by a leaf spring 52.

The pyrotechnic cutter comprises the trigger mechanism 19 with the trigger 27 with the trigger hook 28 and the additional projection 29 located in the groove 54 made in the body of the handle 20, wherein the projection 29 extends beyond the contour of the body of the handle of the trigger mechanism 20.

A gas divider 55 - a muffler, which is connected to the piston cavity 57 and the atmosphere through a nozzle 56, is installed on the separate housing 40.

In the body of the lower blade 4, a spring-loaded rod 59 is installed loades with a spring 58 and interacting with the projection 60 of the upper blade 6.

The cartridge cases 2, 3 of the cartridges 1 used in the pyrotechnic cutter have different configurations, one of the cartridge cases has a protrusion 2, the other cartridge cases has a groove 3, and all these cartridges have different geometric dimensions.

Pyrotechnic cutter works as follows.

First, the safety catch 53 of the cutter is checked for being set to the safety position, then they are loaded with the blank cartridge 1, for which purpose the handle 20 is opened by pressing the button 22 of the bracket 23, wherein the axis-lock 24 of the bracket 23 disengages from the separate housing 40, the projection 39 of the separate housing 40 interacts with the mating projection 38 made on the striker 33, the striker 33, spring-loaded by the spring 32, rotates away from the firing pin 41, releasing it, and the support 36, spring-loaded by the spring 37, pivotally mounted in the housing of the trigger mechanism 19, engages with the additional projection 35 of the striker 33, made on the lower part of the hinged joint of the striker 33 and the housing of the trigger mechanism 19, and the striker 33 is fixed by the support 36. The firing pin 41, under the action of its return spring 61, goes beyond the contour of the housing of the handle of the trigger mechanism 20. The blank cartridge 1 is inserted into the removable chamber 16 and by pressing the button 22 of the bolt 23 back, the handle 20 is closed, while the axis - the bolt 24 of the bracket 23, engages with the separate housing 40, fixing the handle 20 in the closed position. Due to the fact that the firing pin 41 in this case is located beyond the contour of the handle 20, and the striker 33 is fixed by the support 36, the possibility of its interaction with the primer of the cartridge 1 and its inadvertent activation is excluded, and thereby the safety of working with the pyrotechnic cutter is increased.

Depending on the cartridges 1 available to the operator, the pyrotechnic cutter must have a removable cartridge chamber 16 corresponding to the cartridge case 2, 3, with which the cutter are supposed to work, and an extractor 17, 18 corresponding to it. In the removable cartridge chamber 16 additional grooves 42 are made, in which the end of the extractor 17, 18 is placed, interacting with the protrusion or groove 2, 3 of the cartridge 1.

For the cartridge case 1 with the groove 3, the removable cartridge chamber 16 must be installed, repeating the geometric dimensions of this cartridge case 1 with the groove 3, and the extractor 18 in the form of a two-plate two-arm lever, comprising two plates - the upper plate 46 and the lower plate 47, wherein the upper plate 46 is made in the form of the leaf spring, interacting with the one arm with the groove 3 of the cartridge case 1, with the other arm - with the groove 45 of the separate housing 40, wherein the arm interacting with the groove of the cartridge case is provided with the bevel 48 on one side, on the other side it has the right angle 49 and the projection 50 in the form of a contact surface interacting with the body of the handle 20, the other arm is simultaneously the element of the lower plate 46 interacting with the projection 25 of the handle 20. When inserting the corresponding cartridge case 1 into the removable cartridge chamber 16 and closing the handle 20 by turning it when pressing the button 22 of the bracket 23, the bevel 48 of the extractor arm 18 in the form of the upper plate spring 46 begins to interact with the cartridge 1, and the projection 50 of the contact surface, contacting the body of the handle 20, presses the cartridge 1 into the removable cartridge chamber 16, while the extractor arm, made in the form of the leaf spring of the upper plate 46, moves due to the bevel 48, jumping into the groove 3 of the cartridge case 1, while the axis - lock 24 of the bracket 23 under the action of the spring 21 the handle 20 of the trigger mechanism closes and is fixed on a separate housing 40.

For the cartridge case 1 with the projection 2, the removable cartridge chamber 16 must be installed, repeating the geometric dimensions of this cartridge case 1 with the projection 2, and the extractor 17, made in the form of a two-arm lever, contacting with the one end 43 with the projection 2 of the cartridge case 1, with the other end 44 - with the projection 25 of the handle 20 of the trigger mechanism, in this case, when inserting into the removable cartridge chamber 16 the corresponding cartridge 1 and closing the handle 20 by turning it when pressing the button 22 of the bracket 23, the end 43 of the extractor 17 begins to interact with the projection 2 of the cartridge 1, the body of the handle 20 presses the cartridge 1 into the removable chamber 16. In this case, the axis - lock 24 of the bracket 23, under the action of the spring 21, the handle 20 of the trigger mechanism is closed and fixed on a separate housing 40.

Also, for the cartridge case 1 with the projection 2, an extractor 18 in the form of the two-plate double-arm lever can be installed, wherein the bevel 48, the right angle 49, the contact area 50 interacting with the body of the handle 20, must be made in a geometry corresponding to the geometry of the cartridge case 1 with the projection 2.

When opening the handle 20, in a case with the cartridge case 1 with the projection 2, the extractor 17 with one shoulder 44 interacts with the projection 25 on the body of the handle 20, moving the extractor 17 to the open position, and with the other arm 43 the extractor 17 ejects the cartridge case 1 with a projection 2, in the other case with the cartridge case 1 with the groove 3, the extractor 18 with the arm of the lower plate 47, interacting with the projection 25 of the handle 20, rotates the extractor 18, wherein the upper plate 46, made in the form of a leaf spring, with the rm interacting with the groove 3 of the cartridge case 1 at the right angle 49, which does not allow the upper plate 46, made in the form of a leaf spring, to spring, ejects the cartridge case 1 with the groove 3.

The removable cartridge chambers 16 are made easily removable and are installed in a separate housing 40 on a thread, and the extractors 17, 18 are pivotally installed on the separate housing 40 by means of a pin 62.

This design of pyrotechnic cutter make it possible to use cartridge cases 1 with protrusions 2 or grooves 3 of various geometries, from the consumer's stock, and significantly expand the possibility of using the pyrotechnic cutter.

The loaded pyrotechnic cutter is moved to the cutting site, the cutting blades 4, 6 are brought to the object of cutting, and the safety element - the flag, turns the safety 53 to the combat position, while the operator holds the cutter with one hand by the ribbed body 63, near the lower blade 4, with the other hand, depending on how it is more convenient to work, the operator himself decides how to work, through the trigger hook 28 of the trigger 27 or by the projection 29 of the trigger 27, extending beyond the contour of the handle 20. When pulling the trigger 27, spring-loaded by the torsion spring 30, the ratchet 31 begins to interact with the projection 34 of the striker 33 and the support 36, spring-loaded by the torsion spring 37. In this case, the striker 33, under the action of the torsion spring 32, is pulled, forcing the spring 32, and the support 36, spring-loaded by the torsion spring 37, moves away from the striker 33 and does not interact with the projection 35 of the striker 33. The ratchet 31, by the projection 34, rotates the striker 33 by a certain angle, forcing the spring 30, jumps off the projection 34, and the striker 33, under the action of the spring 30, rotates in the opposite direction and hits the firing pin 41. When working behind the trigger hook 28 the operator, interacting with the body of the handle 20 with the other hand, presses the trigger hook 28, the cutter, by means of the trigger mechanism 19, activates the primer of the cartridge case 1, the cutter is triggered, the structure is cut, and the recoil from the triggering of the cartridge 1 falls on the hand pressing the trigger 27, interacting with the body of the handle 20 and can cause pain. When working for the projection 29 of the trigger 27 of the trigger mechanism 19, the same operation of the trigger mechanism 19 occurs, the cutter is triggered, and the recoil from the cutter passes the operator's hand, since it does not interact with the body of the handle 20. This makes it possible to expand the possibility of working with cutter and eliminate the recoil of the cutter on the operator's hand.

When the cartridge is triggered, the gunpowder located in the cartridge case 1 ignites, and through the calibrated opening 51 of the removable cartridge chamber 16, which functions as a nozzle, the gases move into the above-piston cavity 57, thereby eliminating unnecessary energy losses when moving gases through the cavity of the nozzle and the calibrated opening of the nozzle, improving the energy of the cutter, and also simplifying the design of the cutter.

The gas stream that has passed through the calibrated opening 51 of the removable chamber 16 creates pressure in the above-piston cavity 57, whereby the piston 13 with the stop 14 of the spring-loaded pusher 12 by the spring 11 and the slider 10 located inside the lower blade 4 move, interacting through the link 9, pivotally connected by axes 7, 8 with the upper blade 6 pivotally mounted on the lower blade 4, rotates, making a cut with its cutting part, after aligning the cutting parts - blades, that is, having made a cut, the support platform "G" of the stop 14 with the piston 13 of the spring-loaded pusher 12 begins to interact with the support platform "E" of the damper 15, made in the form of conical springs, the conical springs are compressed, creating counterpressure on the stop 14 with the piston 13, and dampen most of the energy of the spring-loaded pusher 12, the stop 14 with the piston 13 and the slider 10, after compression of the damper 15 - using the stroke of the conical springs of the damper 15, part of the remaining energy and the inertial mass of the spring-loaded pusher 12, the stop 14 with piston 13 and slider 10 is damped by the interaction of support surface "D" of slider 10 with the mating internal support surface "B" of lower blade 4, while the remaining undamped energy of the upper blade 6, the link 9 and the connecting axes 7, 8 is damped by the interaction of support surface "V" made on the upper blade 6 with the mating external support surface "A" made on the lower blade 4, all this as a whole ensures reliable damping of the inertial mass of all moving elements of the slider 10, the spring-loaded pusher 12 with the stop 14 and the piston 13, as well as the upper blade 6, with the link 9 and the axes 7, 8 connecting them, which makes it possible to increase the reliability of the pyrotechnic cutter, after stopping the moving parts of the cutter - the spring-loaded pusher 12 with the stop 14, the piston 13, the slider 10, the upper blade 6 with the link 9 and the axes 7, 8, all these movable elements by means of the spring 11 of the spring-loaded pusher 11 and the spring 58 with the rod 59 interacting with the projection 60 of the upper blade 6, installed inside the lower blade 4, return to their original position, while the powder gases exit the above-piston cavity through the nozzle 56 and the gas diffuser - silencer 55 into the atmosphere. After which, by pressing the button 22 of the bracket 23, the axis - the bolt 24 disengages from the separate housing 40, after which the handle 20 is opened, while the projection 25, made on the housing of the trigger mechanism 20, interacts with the lower arm of any of the extractors 17, 18 (the lower arm of the extractor 17 under the cartridge case 1 with the projection 2, or the lower plate 47 of the extractor 18 under the cartridge case 1 with the groove 3, the upper arm 43 of the extractor 17 and the right angle 49 of the upper plate 46 of the extractor 18, interacting with the cartridge cases 1, extract them from the removable chamber 16, wherein for the cartridge case 1 with the projection 2, the extractor 17 with its upper arm behind the projection 2 of the cartridge case ejects the cartridge case 1, and wherein for the cartridge case 1 with the groove 3, the extractor 18, made in the form of a two-plate two-arm lever having two plates - the upper plate 46 and the lower plate 47, the upper plate, made in the form of a leaf spring, interacts with the side having the right angle 49 with the groove 3 and, due to the pressing of the upper plate 46 to the groove 3 in the cartridge case 1 by the leaf spring due to the right angle 49, which does not allow the spring to be compressed, ejects the cartridge 1 from the removable cartridge chamber 16, wherein the projection 39, made on the separate body 40 of the removable cartridge chamber 16, interacting with the projection 38 on the upper arm of the striker 33, rotating the striker 33 from the striker 41 spring-loaded by the spring 61 and the support 36, spring-loaded by the torsion spring 37, pivotally mounted in the body of the trigger mechanism 19, engages with the additional projection 35 of the striker 33, fixing the striker 33, then, by pressing the button 22 of the bracket 23, the handle 20 is moved to the closed position, fixed by the axis - by means of lock 24 in the closed position, after which the safety catch 53 is manually turned by the flag to the safety position. After which the pyrotechnic cutter is ready for repeated use, in the event that the trigger 28 is pressed in vain or the upper projection 29 of the trigger 27 of the trigger mechanism 17 is triggered, the support 36 will disengage from the additional projection 35 of the striker 33 and the upper shoulder of the striker 33 will interact with the striker 41, bringing it beyond the contour of the handle body 20, but when equipping the cutter for repeated activation when the handle 20 is opened, the striker 33 will again stand on the support 36, excluding interaction with the striker 41 and thereby excluding the exit of the striker 41 beyond the exit of the contour of the handle body 20, ensuring safe operation of the pyrotechnic cutter.

The use of the invention in comparison with the prototype allows to create pyrotechnic cutter for cutting mechanical engineering structures, greater reliability with reliable damping of the inertial mass of the moving elements, the slider of the spring-loaded pusher with a stop and piston, the upper blade with the link and the axis, to ensure the possibility of working with pyrotechnic cutter with various cartridges having different sleeve geometry, to eliminate unnecessary energy loss and simplify the design, to increase the safety of the trigger mechanism, due to the exclusion of the possibility of the striker protruding when closing the handle of the portable pyrotechnic cutter, in general to increase the reliability and safety of working with the pyrotechnic cutter, to expand the possibility of working with the pyrotechnic cutter, to eliminate the possibility of the cutter being thrown back onto the operator's hand.

## Claims

1. A pyrotechnic cutter, which operates on cased blank cartridges, comprises a fixed lower blade having an internal support surface and pivotally connected to an upper blade which interacts with a link and a spring-loaded pusher with a slider, wherein a spring-loaded pusher is provided with a stop and a piston having support surfaces on the stop and the slider, a damper with a support surface, a cartridge chamber, an extractor, a trigger mechanism with a handle having a projection, a hinged and spring-loaded trigger with a ratchet and a trigger hook, a striker with a projection in a lower hinge part of the striker, and a firing pin,
**characterized in that** the upper blade is equiped with a support surface interacting with an external support surface formed on the lower blade.

2. The pyrotechnic cutter accoridng to claim 1, **characterized in that** it is equipped with removable cartridges of various configurations repeating the contour of various cartridge cases having a protruding ledge or a recessed groove, wherein under the cartridge case with a ledge, the extractor is made in the form of a two-arm lever contacting with one end with the ledge of the cartridge case, with the other end with a protrusion of a handle, wherein under the cartridge case with a recessed groove the extractor is also made in the form of a two-plate two-arm lever having two plates - an upper plate and a lower plate, wherein the upper plate is made in the form of a leaf spring interacting with one arm with the groove of the cartridge case, wherein the arm interacting with the groove of the cartridge case on one side is provided with a bevel and on the other side has a right angle and a protrusion with a contact surface, wherein the lower plate with its arm interacts with the protrusion of the handle, wherein the cartridges on one side at the exit are provided with a calibrated hole that performs the functions of a nozzle, on the other side they have a slit under one end of the extractor.

3. The pyrotechnic cutter according to claim 1 or 2, **characterized in that** a projection is formed on a separate body of the cutter interacting with a counter projection formed on the upper arm of the striker of the trigger mechanism, wherein a spring-loaded support is formed in the body of the trigger mechanism interacting with an additional projection in the lower part of the hinge joint of the striker and the ratchet pivotally mounted on the trigger.

4. The pyrotechnic cutter according to any of claims 1 to 3, **characterized in that** the trigger, which has the trigger hook of the trigger mechanism of the cutter, is provided with an additional protrusion located in a groove formed in the body of the trigger mechanism and extending beyond the contour of the body of the trigger mechanism.
